(19) Europäisches Patentamt
European Patent Office
Office européen des brevets

(11) **EP 2 474 754 B1**

(12) **EUROPÄISCHE PATENTSCHRIFT**

(45) Veröffentlichungstag und Bekanntmachung des Hinweises auf die Patenterteilung:
**25.09.2013 Patentblatt 2013/39**

(51) Int Cl.:
***F16D 65/18*** *(2006.01)*

(21) Anmeldenummer: **12150461.7**

(22) Anmeldetag: **09.01.2012**

(54) **Selbstverstärkende Scheibenbremse mit pneumatischer oder elektromechanischer Betätigung**

Self-reinforcing disc brake with pneumatic or electromechanical actuation

Frein à disque à auto-amplification doté d'un actionnement pneumatique ou électromécanique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.01.2011 DE 102011008272**

(43) Veröffentlichungstag der Anmeldung:
**11.07.2012 Patentblatt 2012/28**

(73) Patentinhaber: **KNORR-BREMSE Systeme für Nutzfahrzeuge GmbH
80809 München (DE)**

(72) Erfinder: **Gruber, Robert
83539 Pfaffing (DE)**

(74) Vertreter: **Mattusch, Gundula
Knorr-Bremse AG,
Patentabteilung V/RG
Moosacher Strasse 80
80809 München (DE)**

(56) Entgegenhaltungen:
**WO-A1-2009/090011 GB-A- 945 846**

**Beschreibung**

Die Erfindung betrifft eine selbstverstärkende Scheibenbremse mit pneumatischer oder elektromechanischer Betätigung nach dem Oberbegriff des Anspruchs 1.

Derartige Scheibenbremsen sind in unterschiedlicher Bauweise bekannt und haben sich bereits bestens bewährt. Bei ihnen wird eine durch einen Betätigungskolben erzeugte Zuspannkraft beispielsweise durch eine parallel zum Betätigungskolben arbeitende Selbstverstärkungseinrichtung verstärkt.

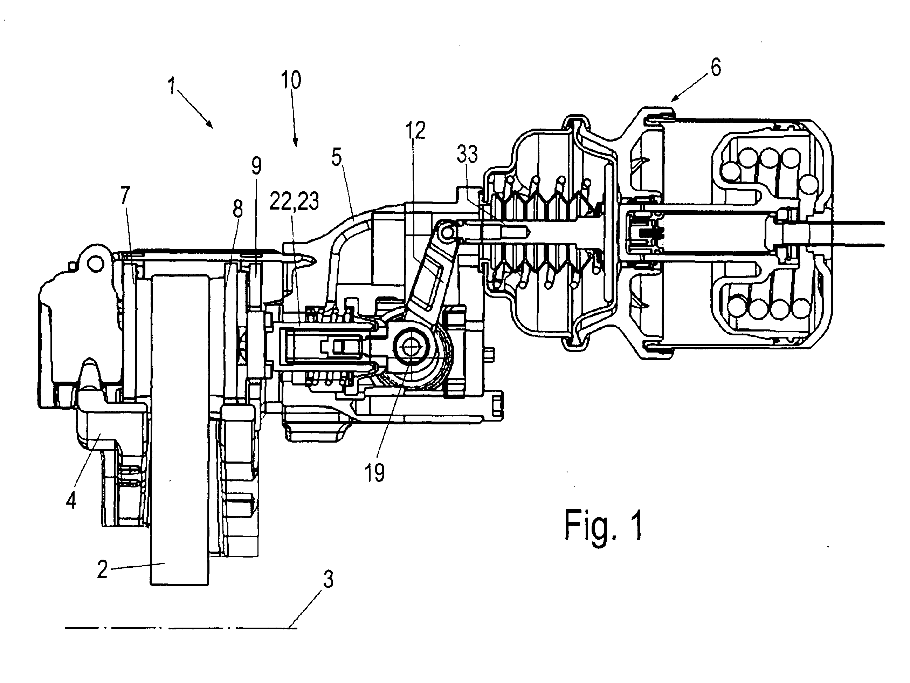

In Fig. 1 illustriert eine beispielhafte Schnittansicht einer Schiebesattel-Scheibenbremse 1 mit einem Bremszylinder 6. Dies ist eine mögliche Bauform. Schwenksattel- oder Festsattel-Ausführungen oder Mischformen sind denkbar, aber hier nicht gezeigt. In einem Bremsträger 4 sind beiderseits einer Bremsscheibe 2, deren Bremsscheibendrehachse 3 nur angedeutet ist, Bremsbeläge 7 und 8 angeordnet. Die Schiebesattel-Scheibenbremse weist einen die Bremsscheibe 2 im Umfangsrandbereich übergreifenden ein- oder hier mehrteiligen Bremssattel 5 (hier mit einem Bremssatteldeckel) auf, in welchem eine Zuspannvorrichtung 10 angeordnet ist. Der Bremssattel 5 ist mittels einer Sattelschiebeführung an einem achsfesten Bremsträger 31 verschieblich geführt (nicht gezeigt). Der Bremszylinder 6 wirkt als Krafterzeuger. Er ist hier ein pneumatischer Bremszylinder 6, welcher an den Bremssattel 5 angesetzt oder angeformt ist, und wirkt über eine Kolbenstange 33 auf einen exzentrisch im Bremssattel 5 gelagerten Bremsdrehhebel 11, der infolge einer Betätigung durch den Bremszylinder 6 um eine senkrecht zur Bremsscheibendrehachse 3 ausgerichtete Bremsdrehhebeldrehachse 19 verschwenkbar ist.

Der Bremsdrehhebel 11 wirkt wiederum über wenigstens einen Betätigungsstempel 22 mit einem Gewindestößel 23 direkt oder über eine Druckplatte 9 auf einen zuspannseitigen Bremsbelag 8. Dabei sind der Betätigungsstempel 22 und der Bremsdrehhebel 11 sowie der Gewindestößel 23 und die Druckplatte 9 gelenkig miteinander derart verbunden, dass der Betätigungsstempel 23 beim Zuspannen der Scheibenbremse 1 ganz oder zumindest im Wesentlichen einer Bewegung des zuspannseitigen Bremsbelags 8 in Umfangsrichtung der Bremsscheibe 2 folgen kann. Die Zuspannvorrichtung 10 ist dabei derart ausgelegt, dass auf den Bremsbelag 8 Druckkräfte einwirken können. Der betätigungsseitige Bremsbelag 8 ist in der Druckplatte 9 aufgenommen, die auch einteilig mit dem Bremszylinder 6 ausgebildet sein kann.

Auf beiden Seiten des Betätigungsstempels 22 mit Gewindestößel 23, d.h. oberhalb der Zeichenebene und unterhalb dieser, ist parallel zu diesen jeweils eine Selbstverstärkungseinrichtung mit einem Druck- oder Selbstverstärkungsstempel angeordnet. Es sind drei Stempel erforderlich, von denen einer die Betätigungskraft überträgt (Betätigungsstempel 22 mit Gewindestempel 23) und die beiden anderen Selbstverstärkungsstempel, welche die Selbstverstärkungskraft abstützen oder umgekehrt .Wichtig ist eine jeweils symmetrische Krafteinleitung auf die Druckplatte bzw. den Bremsbelag oder dessen Belagrückenplatte, um bei unterschiedlichen Anteilen der Betätigungskraft und der Selbstverstärkungskraft an der Gesamtzuspannkraft einen schrägen Verschleiß des Bremsbelags zu verhindern.

Das Dokument WO 2009/090011 A1 beschreibt eine solche Scheibenbremse und deren Funktionsweise.

Bei der beschriebenen Bremsenbauart ergibt sich das Problem, die Bauteile der Betätigungseinrichtung, d.h. Betätigungsstempel 22 und Gewindestößel 23, sowie der Selbstverstärkungseinrichtung mit den Selbstverstärkungsstempeln im Sattelgehäuse unterzubringen. Zum Beispiel bei Bremsen mit Felgengrößen 22,5" und 19,5" ist dies noch mit Kompromissen lösbar, jedoch für Bremsen der Felgengröße 17,5" zum Beispiel und kleine nicht mehr realisierbar. Ebenso können Druckstückfaltenbälge in der Bremse ein Anordnungsproblem bilden.

Es ist daher die Aufgabe der vorliegenden Erfindung, eine verbesserte Scheibenbremse mit Selbstverstärkung zu schaffen.

Die Aufgabe wird durch eine Scheibenbremse mit den Merkmalen des Anspruchs 1 gelöst.

Die Scheibenbremse besteht aus zwei Stempeln, wobei ein Betätigungsstempel die Betätigungskraft aufbringt und ein Selbstverstärkungsstempel die Selbstverstärkungskraft abstützt. Dabei stützt sich nicht nur der Betätigungsstempel, sondern auch der Selbstverstärkungsstempel am Bremsdrehhebel ab.

Demgemäß weist eine selbstverstärkende Scheibenbremse mit pneumatischer oder elektromechanische Betätigung Folgendes auf: einen Bremssattel, wenigstens einen reaktionsseitigen und einen zuspannseitigen Bremsbelag und eine Bremsscheibe; zumindest einen sowohl in Richtung parallel zur Bremsscheibendrehachse als auch parallel zu einer Bremsscheibenreibfläche beweglichen zuspannseitigen Bremsbelag; eine Betätigungseinrichtung mit einem wenigstens mit Druckluft beaufschlagbaren Bremszylinder oder mit einem elektromechanischen Aktuator als Bremskrafterzeuger, der auf eine Zuspannvorrichtung zum Zuspannen des Bremsbelags wirkt, einen Bremsdrehhebel, und einen Betätigungsstempel; und eine Selbstverstärkungseinrichtung einem parallel zu dem Betätigungsstempel angeordneten Selbstverstärkungsstempel. Sie ist dadurch gekennzeichnet, dass der Betätigungsstempel und der Selbstverstärkungsstempel an dem Bremsdrehhebel abgestützt sind.

Dabei können der Betätigungsstempel und der Selbstverstärkungsstempel Schwenkbewegungen des Bremsdrehhebels und Umfangsschiebebewegungen des zuspannseitigen Bremsbelags oder der mit dem Bremsbelag verbundenen Druckplatte ausgleichen, indem sie mit dem Bremsbelag oder mit der mit dem Bremsbelag verbundenen Druckplatte und dem Bremsdrehhebel verschwenkbar verbunden sind.

So kann zum Beispiel der Betätigungsstempel an dem Bremsbelag oder der mit dem Bremsbelag verbundenen Druckplatte mit einer Gabelkopfanbindung verschwenkbar angelenkt sein. Der Selbstverstärkungsstempel kann dabei über eine Kugel und Rampen an dem Bremsbelag oder der mit dem Bremsbelag verbundenen Druckplatte angelenkt sein. Diese Anbindungsarten sind einfach herzustellen und leicht zu montieren.

Der Begriff "-stempel" ist nicht zu eng zu fassen. Er umschließt auch längenveränderliche Baueinheiten aus mehreren Elementen. Derartige Baueinheiten sind zum Beispiel für eine Nachstellung der Bremsbeläge aufgrund ihres Verschleißes oder eines Verschleißes der Bremsscheibe einsetzbar.

Bevorzugt ist in einer Ausführung, dass die Scheibenbremse wenigstens eine Nachstelleinrichtung zum Belag- und/oder Scheibenverschleiß aufweist, wobei der Betätigungsstempel mit einem Gewindestößel und der Selbstverstärkungsstempel mit einer Gewindespindel als axial längenveränderliche, insbesondere teleskopierbare, Baueinheiten ausgebildet sind. In diesem Fall können die Anbindungen an dem Bremsbelag oder der Druckplatte über den Gewindestößel und die Gewindespindel erfolgen. Es ist auch umgekehrt möglich, dass die oben genannten Anbindungen der Stempel an der Druckplatte ausgeführt sind, und der Gewindestößel und die Gewindespindel an dem Bremsdrehhebel schwenkbar abgestützt sind.

In bevorzugter Ausführung ist vorgesehen, dass der Bremsdrehhebel über einen Betätigungsarm mit dem Betätigungsstempel in einem Betätigungslager und über einen Stützarm mit dem Selbstverstärkungsstempel in einem Stützlager zusammenwirken, wobei der Bremsdrehhebel in einem Bremsdrehhebellager an dem Bremssattel gelagert ist. Der Betätigungsstempel ist somit nicht zentrisch vor dem Bremsdrehhebel angeordnet, sondern ebenfalls wie der Selbstverstärkungsstempel seitlich versetzt zum Bremsdrehhebel angeordnet.

Es ist vorteilhaft, wenn das Betätigungslager, das Stützlager und das Bremshebeldrehlager jeweils eine Kugel in kalottenartigen Aufnahmen aufweisen. Damit weisen diese Lager eine Verschwenkbarkeit um mehrere Achsen auf, die es besonders bei dem Stützlager ermöglicht, dass dieses am Bremsdrehhebel angeordnet sein kann.

Der Bremsdrehhebel kann mit dem Bremshebeldrehlager um eine Bremsdrehhebelachse verschwenkbar sein, welche durch das Stützlager verläuft, wobei das Betätigungslager exzentrisch zu der Bremshebeldrehachse angeordnet ist. Dadurch kann bei einem Bremsvorgang der Bremsdrehhebel mittels einer Verschwenkung um die Bremsdrehhebelachse den Betätigungsstempel aufgrund der Exzentrizität mit einer Hubbewegung beaufschlagen, wobei gleichzeitig die Verschwenkung um die Bremsdrehhebelachse keine Auswirkung auf den Selbstverstärkungsstempel hat, d.h. ihm keine Hubbewegung verleiht, da das Stützlager konzentrisch zum Bremsdrehhebellager angeordnet ist.

Eine Zuspannkraft kann auf den Bremsdrehhebel über einen Antriebsarm eingeleitet werden, dessen freies Ende mit dem Bremszylinder oder mit dem elektromechanischen Aktuator zusammenwirkt. Das andere Ende des Antriebsarms bildet einen zentralen Abschnitt als Lagerabschnitt, welcher mit dem Betätigungsarm und dem Stützarm des Bremsdrehhebels verbunden ist und einen Bestandteil des Bremsdrehhebellagers bildet.

Durch diese Anordnung kann der Bremsdrehhebel wie ein Waagebalken wirken, der immer die gleichen Kräfte am Betätigungs- und Selbstverstärkungsstempel einstellt. Diese Art Waagebalken ist dadurch realisiert, dass der Betätigungsarm und der Stützarm des Bremsdrehhebels jeweils einen Hebelarm eines Hebels um eine Längsachse des Bremsdrehhebels bilden, welche durch das Bremshebeldrehlager verläuft und senkrecht auf der Bremshebeldrehachse steht.

Bevorzugt ist dabei, dass die Hebelarme dieses Hebels gleiche Längen aufweisen. Dadurch wird eine symmetrische Krafteinleitung auf die Druckplatte bzw. den Bremsbelag erzielt. Dies ist vorteilhaft, da so bei unterschiedlichen Anteilen der Betätigungskraft und der Selbstverstärkungskraft an der Gesamtzuspannkraft ein Schrägverschleiß des Bremsbelags verhindert werden kann.

Bei einem Bremsvorgang dreht sich der Bremsdrehhebel um die Bremsdrehhebelachse und betätigt den Betätigungshebel, wodurch dieser eine Hubbewegung mit dem Bremsbelage auf die Bremsscheibe ausführt. Kommt der Bremsbelag in Kontakt mit der Bremsscheibe, wird er in Drehrichtung mitbewegt und die Kugeln fahren an den Rampen der Selbstverstärkungseinrichtung hoch. Es entsteht eine Selbstverstärkungskraft, die über den als Waagebalken ausgeführten Hebel aus Stützarm und Betätigungsarm des Bremsdrehhebels auf den Betätigungsstempel zusätzlich einwirkt und die Zuspannkraft abstützt. Ein besonderer Vorteil besteht darin, dass die Selbstverstärkungskraft jedoch nicht als zusätzliche Kraft auf den Bremszylinder bzw. elektromotorischen Aktuator wirkt.

Die Exzentrizität mit dem Hebelarm des Bremsdrehhebels dient zur Erzeugung der Betätigungskraft aus der Zuspannkraft. Gleichzeitig wirkt der Bremsdrehhebel mit seinen Hebelarmen als Waagebalken für eine Einstellung von gleichen Kräften am Betätigungsstempel und Selbstverstärkungsstempel. Außerdem weist der Bremsdrehhebel die Funktion zur Abstützung der Selbstverstärkungskraft auf.

Die oben beschriebene selbstverstärkende Scheibenbremse mit zwei Stempeln kann somit aufgrund ihres reduzierten Raumbedarfs bei kleineren Felgengrößen eingesetzt werden. Außerdem ist es möglich, dass sie auch bei größeren Felgengrößen verwendbar ist, wodurch sie nicht nur einen großen Einsatzbereich als weiteren Vorteil aufweist, sondern ihre Bauteilzahl gegenüber dem Stand der Technik verringert ist.

Die Erfindung wird nun anhand eines Ausführungsbeispiels mit Bezug auf die beigefügten Zeichnungen näher erläutert. Hierbei zeigt:

Fig. 1        eine beispielhafte Schnittansicht einer Schiebesattel-Scheibenbremse nach dem Stand der Technik;

Fig. 2        eine beispielhafte, vereinfachte Schnittdarstellung eines Ausführungsbeispiels einer erfindungsgemäßen Scheibenbremse;

Fig. 3        eine schematische Draufsicht eines Ausführungsbeispiels eines Bremsdrehhebels der erfindungsgemäßen Scheibenbremse nach Fig. 2;

Fig. 3a       ein erstes Hebeldiagramm für eine Kraftverteilung an dem Bremsdrehhebel nach Fig. 3;

Fig. 4        eine schematische Schnittansicht des Bremsdrehhebels gemäß X-X nach Fig. 3; und

Fig. 4a       ein zweites Hebeldiagramm für eine Kraftverteilung an dem Bremsdrehhebel nach Fig. 4.

Gleiche Bauelemente bzw. Funktionseinheiten mit gleicher Funktion sind mit gleichen Bezugszeichen in den Figuren gekennzeichnet.

Fig. 1 wurde oben bereits beschrieben und wird hier nicht weiter erläutert.

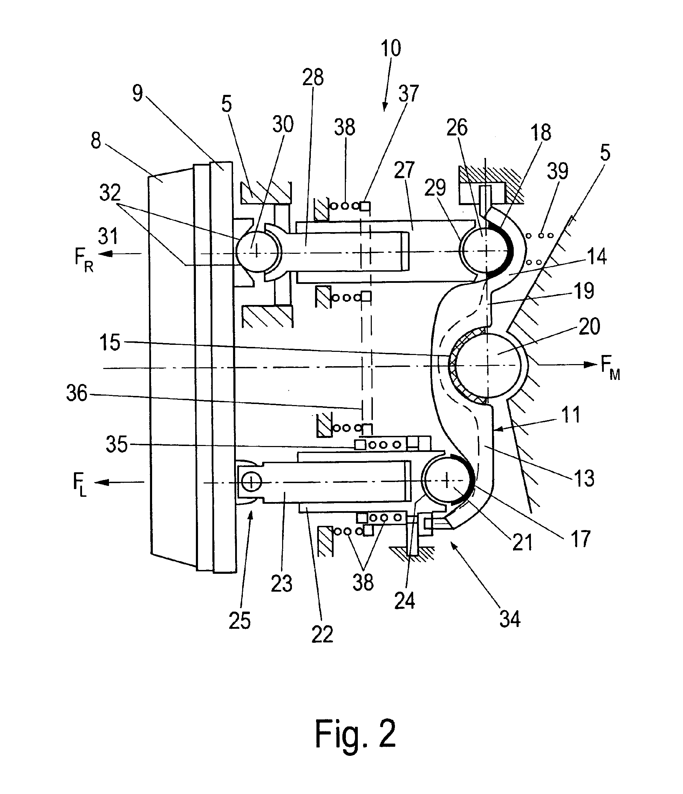

Fig. 2 zeigt eine beispielhafte, vereinfachte Schnittdarstellung eines Ausführungsbeispiels einer erfindungsgemäßen Scheibenbremse 1.

Ein Bremssattel 5 ist nur bruchstückhaft mit Schraffierungen angedeutet. Er umgreift eine Zuspannvorrichtung 10 mit einem Bremsdrehhebel 11, einem Betätigungsstempel 22 mit Gewindestößel 23, einem Selbstverstärkungsstempel 27 mit Gewindespindel 28, und einer Druckplatte 9, welche mit einem zuspannseitigen Bremsbelag 8 verbunden ist. Zur Darstellung der zugehörigen Bremsscheibe 2, an welcher der zuspannseitige Bremsbelag 8 anliegt, wird auf Fig. 1 verwiesen.

Ein Selbstverstärkungseinrichtung ist gebildet durch die folgenden Bauteile: Druckplatte 9, Kugel 30, Rampen 32, Selbstverstärkungsstempel 27 mit Gewindespindel 28. Die Funktion wird hier nicht beschrieben, sie wird zum Beispiel in der Offenlegungsschrift DE 10 2006 785 A1 erläutert.

Die Druckplatte 9 ist in einer Zuspannrichtung bzw. Löserichtung parallel zu einer Mittelachse MA, die parallel zur Bremsscheibendrehachse 3 (Fig. 1) verläuft, und parallel zu einer Bremsscheibenreibfläche verschieblich. Sie steht über die Kugel 30, welche in ihr in keilartigen Rampen 32 gelagert ist, mit dem zum Bremsbelag 8 weisenden Ende des axial längenveränderlichen Druckstempels bzw. Nachstellkolbens, hier als Selbstverstärkungsstempel 27 und Gewindespindel bezeichnet, in Wirkverbindung. Die Kugel 30 ist in dem zum Bremsbelag 8 weisenden Ende der Gewindespindel in einer kalottenartigen Ausnehmung geführt. Die Rampen 32 sind in einem spitzen Winkel von mehr als 0 und weniger als 90° zur Bremsscheibenreibfläche ausgerichtet. Die Rampen 32 könnten auch oder ergänzend auch in der Gewindespindel 28 ausgebildet sein.

Die Gewindespindel 28 ist im Inneren des Selbstverstärkungsstempels 27 in ein Innengewinde hineingeschraubt. Das andere Ende des Selbstverstärkungsstempels 27 ist mit einer kalottenartigen Stützkugelaufnahme 29 ausgebildet, in welcher eine Stützkugel 26 aufgenommen ist. Diese Stützkugel 26 ist ihrerseits auch in einer kalottenartigen Stützaufnahme 18 eines Stützarms 14 des Bremsdrehhebels 11 aufgenommen und steht mit diesem in Wirkverbindung. Die Aufnahmen 18 und 29 bilden mit der Stützkugel 26 ein Stützlager B. Der Bremsdrehhebel 11 wird weiter unten noch ausführlich erläutert.

An der Druckplatte 9 ist der Betätigungsstempel 22 mit dem zum Bremsbelag 8 weisenden Ende des in ihm (hier ebenfalls wie beim Selbstverstärkungsstempel 27 in einem Innengewinde) eingeschraubten Gewindestößels 23 zur Übertragung der in Richtung der Bremsscheibe 2 wirkenden Druck- und Zugkräfte in einer Gabelkopfanbindung 25 verschwenkbar angelenkt. Hier ist das zugehörige Ende des Gewindestößels 23 mit einem Gabelkopf versehen, der mit einem in einem Lager der Druckplatte 9 gehaltenen Bolzen zusammenwirkt. Die Bolzenachse verläuft senkrecht zur Zuspannrichtung des Bremsbelags 8 und bildet eine Schwenkachse für den Gewindestößel 23 und Betätigungsstempel 22. Der Betätigungsstempel 22 ist in ähnlicher Weise wie der Selbstverstärkungsstempel 27 an seinem anderen Ende mit einer kalottenartigen Betätigungskugelaufnahme 24 versehen, die eine Betätigungskugel 21 aufnimmt. Die Betätigungskugel 21 ist in ähnlicher Weise wie die Stützkugel 30 in einer kalottenartigen Betätigungsaufnahme 17 eines weiteren Arms des Bremsdrehhebels 11 aufgenommen. Dieser weitere Arm liegt dem Stützarm 14 gegenüber und wird als Betätigungsarm 13 bezeichnet. Der Betätigungsstempel 22 wirkt mit dem Stützarm 14 über die Betätigungskugel 21 zusammen. Mit den Aufnahmen 17 und 24 und der Betätigungskugel 21 wird ein Betätigungslager A gebildet.

Bei angelegtem Bremsbelag 8 an der Bremsscheibe 2 wird dieser in Umfangsrichtung der Bremsscheibe 2 verschoben. Diese Bewegung wird durch den Selbstverstärkungsstempel 27 und den Betätigungsstempel 22 ermöglicht, indem diese verschwenkbar sind. Aufgrund der Betätigungskugel 21 ist der Betätigungsarm 22 mit dem Gewindestößel 23 und dessen Gabelkopfanbindung 25 an der Druckplatte 9 sowohl um die Bolzenachse der Gabelkopfanbindung 25 als auch um eine dazu parallele Achse der Betätigungskugel 21 verschwenkbar. Der Selbstverstärkungsstempel 27 ist über die Stützkugel 26 und die Kugel 30 verschwenkbar, wie leicht vorstellbar ist. Mit anderen Worten, die Kugeln 21, 26 und 30 und der Bolzen der Gabelanbindung 25 bilden Schwenkachsen, die senkrecht zur Zeichenebene stehen und parallel zueinander sind.

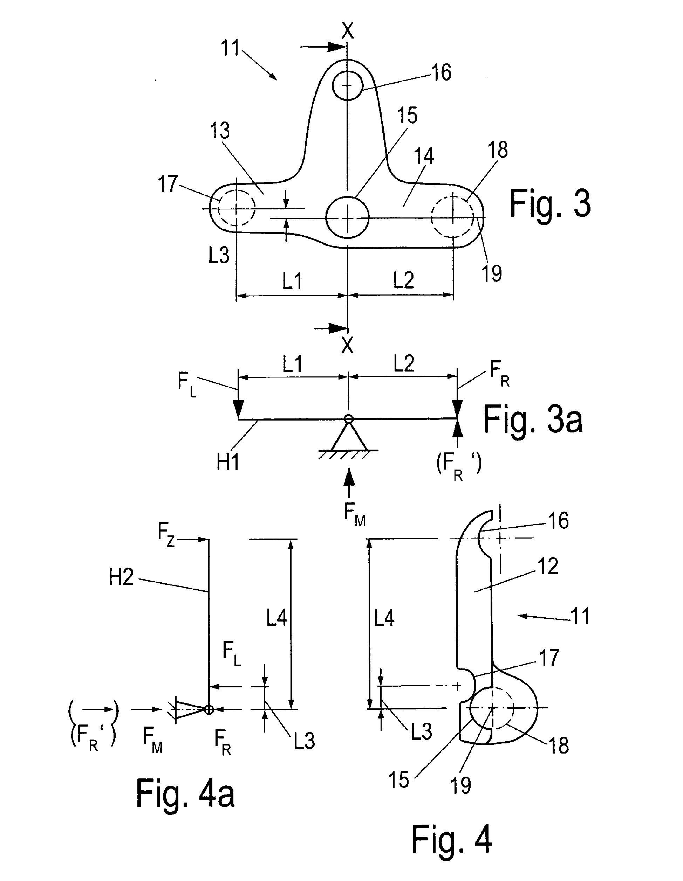

Der Bremsdrehhebel 11 weist in seiner Mitte in einer Verbindungsabschnitt zwischen dem Betätigungsarm 13 und dem Stützarm 14 eine zentrale kalottenartige Lageraufnahme 15 in einem Lagerabschnitt D auf, die entgegengesetzt zu den anderen Aufnahmen 17 und 18, d.h. vom Bremsbelag 8 gegen die Zuspannrichtung weisend, angeordnet ist. Die Lageraufnahme 15 dient zur Aufnahme einer Lagerkugel 20, welche den Bremsdrehhebel 11 im Bremssattel 5 in einer korrespondierenden Aufnahme abstützt. Diese Aufnahme, die Lageraufnahme 15 und die Lagerkugel bilden ein Bremsdrehhebellager C mit einer Bremsdrehhebelachse 19, die parallel zum Bremsbelag 8 und senkrecht zur Zuspannrichtung verläuft. Außerdem verläuft die Mittelachse MA rechtwinklig zur Bremshebeldrehachse 19 durch das Bremshebeldrehlager C, und eine Längsachse LA des Bremsdrehhebels 11 ebenfalls (siehe Fig. 3), welche senkrecht auf der Zeichenebene steht.

Der Betätigungsstempel 22 mit Gewindestößel 23 ist nicht zentrisch vor dem Bremsdrehhebel 11 angeordnet, sondern wie der Selbstverstärkungsstempel 27 mit Gewindespindel 28 seitlich versetzt zum Bremsdrehhebel 11. Der Betätigungsstempel 22 mit Gewindestößel 23 und der Selbstverstärkungsstempel 27 mit Gewindespindel 28 sind dabei symmetrisch zu der Mittelachse MA angeordnet, welche parallel zur Bremsscheibendrehachse 3 (siehe Fig. 1) mittig durch die Lagerkugel 20, d.h. das Bremsdrehhebellager C, verläuft. In dieser Mittelachse MA verläuft auch die Wirkungsachse einer Lagerkraft $F_M$. Der Betätigungsstempel 22 mit Gewindestößel 23 dient zur Übertragung einer Betätigungskraft $F_L$ und der Selbstverstärkungsstempel 27 mit Gewindespindel 28 überträgt eine Selbstverstärkungskraft $F_R$. Der Selbstverstärkungsstempel 27 mit Gewindespindel 28 stützt sich somit mit seiner Reaktionskraft nicht am Bremssattel 5 ab, sondern über die Stützkugel 26 am Bremsdrehhebel 11 im Stützlager B.

Die Bremshebeldrehachse 19 verläuft durch den Mittelpunkt des Bremsdrehhebellagers C und durch den Mittelpunkt des Stützlagers B. Somit ist die Stützaufnahme 18 für den Selbstverstärkungsstempel 27 konzentrisch zur Lagerung des Bremsdrehhebels 11 auf der Bremshebeldrehachse 19 angeordnet. Das heißt, dass bei einer Verschwenkung des Bremsdrehhebels 11 um die Bremshebeldrehachse 19 keine Hubbewegung durch das Stützlager B auf den Selbstverstärkungsstempel 27 übertragen wird. Die Betätigungsaufnahme 17 der Bremsdrehhebels 11 mit der Betätigungskugel 21 ist jedoch zur Bremsdrehhebelachse 19 aber um ein Maß (Hebelarm L3 in Fig. 3, 4, 4a) in Richtung auf den Bremsbelag 8 versetzt. Diese exzentrische Anordnung ist wie in WO 2009/090011 A1 beschrieben notwendig, um bei Verschwenkung des Bremsdrehhebels 11 um die Bremsdrehhebelachse 19 bei einem Bremsvorgang eine Hubbewegung des Betätigungsstempels 22 zu erwirken. Mit anderen Worten, bei einem Bremsvorgang verschwenkt der Bremsdrehhebel 11 und erzeugt durch das exzentrische Betätigungslager A eine Hubbewegung des Betätigungsstempels 22, bewirkt dadurch aber keine Hubbewegung im Stützlager B. Durch diese Anordnungen wirkt der Bremsdrehhebel 11 wie ein Waagebalken (Hebel H1 in Fig. 3 a), welcher immer die gleichen Kräfte am Betätigungsstempel 22 und am Selbstverstärkungsstempel 27 einstellt. Dies wird unten noch näher beschrieben.

Wird nun der Bremsdrehhebel 11 über die Kolbenstange 33 des Bremszylinders 6 (siehe Fig. 1), welche mit dem Bremsdrehhebel 11 über eine Antriebsaufnahme 16 (siehe Fig. 3) zusammenwirkt, betätigt, führt der Bremsdrehhebel 11 eine Schwenkbewegung um die Bremsdrehhebelachse 19 aus, wie auch in WO 2009/090011 A1 beschrieben ist. Durch die zur Bremsdrehhebelachse 19 exzentrisch angeordnete Betätigungsaufnahme 17 und die Betätigungskugel 21 wird der Betätigungsstempel 22 mit seinem Gewindestößel 23 dabei zur Bremsscheibe 2 hin bewegt. Kommt der Bremsbelag 8 mit der sich drehenden Bremsscheibe 2 (Fig. 1) in Kontakt, wird er in Drehrichtung bzw. Umfangsrichtung der Bremsscheibe 2 mitbewegt, und die Kugel 30 fährt an einer der beiden Rampen 32 (je nach Drehrichtung) hoch. Es entsteht dabei eine Selbstverstärkungskraft $F_R$, welche über die Gewindespindel 28 in den Selbstverstärkungsstempel 27 und durch die Stützkugel 26 in den Stützarm 14 des Bremsdrehhebels 11 eingeleitet wird. Die Selbstverstärkungskraft $F_R$ wird somit an dem als Waagebalken ausgeführten Bremsdrehhebel 11 abgestützt, wobei dieser durch eine Hebelwirkung um die Lagerachse LA, die auf der Zeichenebene der Fig. 2 senkrecht steht, im Uhrzeigersinn verschwenkt wird, derart, dass eine Betätigungskraft auf den Betätigungsstempel 22 erhöht wird. Dabei wirkt die Selbstverstärkungskraft $F_R$ nicht als zusätzliche Kraft auf den Bremszylinder 6.

Der Betätigungsstempel 22 weist einen Zahnkranz 35 auf, der zu einem Nachstellgetriebe 34, 35, 36, 37 gehört. Ebenso besitzt der Selbstverstärkungsstempel 27 einen Zahnkranz 37, der mit dem Zahnkranz 35 über ein Zwischenrad mit Zahnkranz 36 zusammenwirkt. Da der Betätigungsstempel 22 und der Selbstverstärkungsstempel 27 gegenüber dem Bremsdrehhebel 11 in Kugeln 17 und 18 gelagert sind und mit Gewindestößel 23 bzw. Gewindespindel 28 über ein Gewinde verbunden sind, mit welchen sie zum Zwecke der Verschleißnachstellung längenveränderlichen Stößel bzw. Nachstellkolben bilden, können sie sich um ihre Längsachsen verdrehen. Mit dem Bezugszeichen 34 ist eine Nachstelleinrichtung bezeichnet, die sich hier an dem Ende des Betätigungsstempels 22 befindet, welches die Betätigungskugelaufnahme 24 aufweist. Diese Nachstelleinrichtung steht in Zusammenwirkung mit dem Betätigungsarm 13 des Bremsdrehhebels 11 und wird von diesem betätigt. Hierdurch wird erreicht, dass die Antriebs-Drehbewegung ausgelöst durch die Schwenkbewegung des Bremsdrehhebels 11 um die Bremsdrehhebelachse 19 auf die Nachstelleinrichtung nur synchron auf den Betätigungsstempel 22 und den Selbstverstärkungsstempel 27 einwirkt. Die Bauteile der Nachstelleinrichtung 34, 35, 36 und 37 sind an den jeweiligen Stempeln 22, 27 verschiebbar in deren Längsrichtungen angebracht, damit die unterschiedlichen Längsbewegungen der Stempel 22, 27 das Zusammenwirken der Zahnkränze unbeeinflusst lassen. Hierzu sind Haltefedern 38 konzentrisch an den Stempeln 22, 27 zwischen den Bauteilen der Nachstelleinrichtung 34, 35, 36, 37 und dem Bremssattel 5 angeordnet. Auf diese Federn 38 wird nicht näher eingegangen.

Durch die Kraft von Rückstellfedern (nicht gezeigt) wird die Zuspannrichtung 10 zusammengehalten.

Zumindest eine Bremsdrehhebelfeder 39 ist hier zwischen Bremssattel 5 und Unterseite des Stützarms 14 angeordnet. Diese Feder 39 drückt den Stützarm 14 gegen den Selbstverstärkungsstempel 27 zur Spielfreiheit der Stützkugel 26 und ihrer Aufnahmen 29 und 18.

In den Figuren 3 bis 4 werden die Kräfteverhältnisse im Zusammenhang mit dem Bremsdrehhebel 11 erläutert.

Fig. 3 stellt eine schematische Draufsicht eines Ausführungsbeispiels des Bremsdrehhebels 11 der erfindungsgemäßen Scheibenbremse 1 nach Fig. 2 dar, und Fig. 3a zeigt dazu ein erstes Hebeldiagramm für eine Kraftverteilung an dem Bremsdrehhebel 11 nach Fig. 3.

Der Bremsdrehhebel 11 ist hier in einer Draufsicht gesehen in Blickrichtung auf den Bremsbelag 8 in Fig. 2 dargestellt. Er weist eine allgemeine T-Gestalt auf, die hier auf dem Kopf steht. Der Bremsdrehhebel 11 weist einen zentralen Körper auf, der als Antriebsarm 12 an einem oberen Ende mit einer Antriebsaufnahme 16 ausgebildet ist. Sein unteres Ende weist die Lageraufnahme 15 auf und bildet den bereits in Fig. 2 angegebenen zentralen Abschnitt als Lagerabschnitt D, welcher hier den nach links hin weisenden Betätigungsarm 13 und den nach rechts hin weisenden Stützarm 14 verbindet. Die am Ende des Betätigungsarms 13 angeordnete Betätigungsaufnahme 17 und die am Ende des Stützarms 14 befindliche Stützaufnahme 18 sind gestrichelt gezeichnet, da sie sich auf der gegenüberliegenden, hier nicht sichtbaren Seite des Bremsdrehhebels 11 befinden, die zum Bremsbelag 8 (Fig. 2) weist. Der Betätigungsarm 13 und damit die Betätigungsaufnahme 17 gegenüber dem Stützarm 14 zur Antriebsaufnahme 16 hin um einen Hebelarm L3 versetzt angeordnet.

Durch den Antriebsarm 12 verläuft die Längsachse LA und schneidet in der Mitte der Lageraufnahme 15 die Bremsdrehhebelachse 19, welche die Mitte der Lageraufnahme 15 und die Mitte der Lageraufnahme 18 verbindet. Die Betätigungsaufnahme 17 ist gegenüber der Bremsdrehhebelachse 19 um den Hebel L3 versetzt bzw. exzentrisch angeordnet. Dies wird im Zusammenhang mit Fig. 4 und 4a näher erläutert.

Betätigungsarm 13 und Stützarm 14 bilden jeweils einen Hebelarm L1 und L2, ausgehend jeweils von der Mitte der Aufnahmen 17 und 18 zur Längsachse LA des Bremsdrehhebels 11. Ein solcher Hebel H1 ist in dem ersten Hebeldiagramm in Fig. 3a, das zur Fig. 3 gehört, schematisch als Schnittansicht in Längsrichtung von Betätigungsarm 13 und Stützarm 14 aus Fig. 3 dargestellt.

Der Hebel H1 ist in der Lagerachse LA in der Lageraufnahme 15 über die Lagerkugel 20 am Bremssattel 5 gelagert (siehe Fig. 2). Dies ist hier symbolisch durch ein Lagersymbol angedeutet. Bei Einwirkung einer Zuspannkraft in der Antriebsaufnahme 16 (Fig. 3) auf den Bremsdrehhebel ergibt sich für den Hebel H1 aus Betätigungsarm 13 und Stützarm 14 die in Fig. 3a gezeigte Kraftverteilung. Die Lagerkraft $F_M$ wirkt in Richtung der Mittelachse MA (siehe auch Fig. 2). Am Ende des Hebelarms L1, der durch den Betätigungshebel 13 gebildet ist, wirkt die Betätigungskraft $F_L$ und am Ende des Hebelarms L2 (Stützarm 14) wirkt die Selbstverstärkungskraft $F_R$, der eine Kraft $F_R'$ der Bremsdrehhebelfeder 39 entgegenwirken kann. Die Kraft $F_R'$ wird nicht weiter betrachtet. Außerdem wirkt noch die Zuspannkraft $F_Z$ parallel zu den gezeigten Kräften (siehe Fig. 4 und 4a). Die Kräfte können auch Kraftkomponenten in der angegebenen Richtung sein, z.B. bei einer verschwenkten Stellung von Betätigungsstempel 22 und Selbstverstärkungsstempel 27.

Aus dem Kräftegleichgewicht ergibt sich:

$$F_M = F_L + F_R - F_Z \qquad\qquad (1)$$

Das Hebelgesetz ergibt als Momentengleichgewicht um die Mittelachse MA:

$$F_L \times L1 = F_R \times L2 \qquad\qquad (2)$$

Wenn beide Hebelarme L1 und L2 gleichlang sind, folgt aus (2):

$$F_L = F_R \qquad\qquad (3)$$

So wirkt der Bremsdrehhebel 11 mit Betätigungsarm 13 und Stützarm 14 wie ein Waagebalken, der immer die gleichen Kräfte am Betätigungsstempel 22 und Selbstverstärkungsstempel 27 einstellt.

Fig. 4 zeigt eine schematische Schnittansicht des Bremsdrehhebels 11 gemäß X-X nach Fig. 3, und Fig. 4a stellt ein zweites Hebeldiagramm für eine Kraftverteilung an dem Bremsdrehhebel 11 nach Fig. 4 dar.

Der Bremsdrehhebel 11 bildet mit seinem Antriebsarm 12 einen weiteren Hebel H2.

Dieser Hebel H2 weist einen Hebelarm L4 mit einer Länge auf, die von der Mitte der Antriebsaufnahme 16 zur Mitte der Lageraufnahme 15 verläuft. Der Versatz bzw. die Exzentrizität der Betätigungsaufnahme 17 ist durch den Hebelarm L3 angegeben. Aus dem Kräftegleichgewicht nach Fig. 4a ergibt sich ($F_R'$ wird nicht betrachtet):

$$F_M = F_R + F_L - F_Z \qquad\qquad (4)$$

Und aus dem Momentengleichgewicht um die Bremsdrehhebelachse 19 folgt:

$$F_L \times L3 = F_Z \times L4 \qquad\qquad (5)$$

zu:

$$F_L = F_Z \times L4/L3 \qquad\qquad (6)$$

Die Exzentrizität mit dem Hebelarm L3 des Bremsdrehhebels 11 dient zur Erzeugung der Betätigungskraft $F_L$ aus der Zuspannkraft $L_Z$. Gleichzeitig wirkt der Bremsdrehhebel 11 mit seinen Hebelarmen L1 und L2 als Waagebalken für eine Einstellung von gleichen Kräften am Betätigungsstempel 22 und Selbstverstärkungsstempel 27. Außerdem weist der Bremsdrehhebel 11 die Funktion zur Abstützung der Selbstverstärkungskraft $F_R$ auf.

Die Erfindung ist nicht auf die oben beschriebenen Ausführungsbeispiele beschränkt. Sie ist im Rahmen der beigefügten Ansprüche modifizierbar.

Der Bremsdrehhebel 11 kann andere Formen aufweisen, z.B. eine allgemeine Dreieckform.

**Bezugszeichenliste**

| | |
|---|---|
| 1 | Scheibenbremse |
| 2 | Bremsscheibe |
| 3 | Bremsscheibendrehachse |
| 4 | Bremsträger |
| 5 | Bremssattel |
| 6 | Bremszylinder |
| 7, 8 | Bremsbelag |
| 9 | Druckplatte |
| 10 | Zuspanneinrichtung |
| 11 | Bremsdrehhebel |
| 12 | Antriebsarm |
| 13 | Betätigungsarm |
| 14 | Stützarm |
| 15 | Lageraufnahme |
| 16 | Antriebsaufnahme |
| 17 | Betätigungsaufnahme |
| 18 | Stützaufnahme |
| 19 | Bremsdrehhebelachse |
| 20 | Lagerkugel |
| 21 | Betätigungskugel |
| 22 | Betätigungsstempel |

| 23 | Gewindestößel |
|----|---------------|
| 24 | Betätigungskugelaufnahme |
| 25 | Gabelkopfanbindung |
| 26 | Stützkugel |
| 27 | Selbstverstärkungsstempel |
| 28 | Gewindespindel |
| 29 | Stützkugelaufnahme |
| 30 | Kugelaufnahme |
| 31 | Kugel |
| 32 | Rampe |
| 33 | Kolbenstange |
| 34, 35, 36, 37 | Nachstelleinrichtung |
| 38 | Haltefeder |
| 39 | Bremsdrehhebelfeder |
| A | Betätigungslager |
| B | Stützlager |
| C | Bremsdrehhebellager |
| D | Lagerabschnitt |
| $F_L$ | Betätigungskraft |
| $F_M$ | Lagerkraft |
| $F_R$ | Selbstverstärkungskraft |
| $F_R'$ | Federkraft |
| $F_Z$ | Zuspannkraft |
| H1, H2 | Hebel |
| L1, L2, L3, L4 | Hebelarm |
| LA | Längsachse |
| MA | Mittelachse |

## Patentansprüche

1.  Selbstverstärkende Scheibenbremse (1) mit pneumatischer oder elektromechanische Betätigung, mit:

    a. einem Bremssattel (5), wenigstens einem reaktionsseitigen und einem zuspannseitigen Bremsbelag (7, 8) und einer Bremsscheibe (2);
    b. zumindest einem sowohl in Richtung parallel zur Bremsscheibendrehachse (3) als auch parallel zu einer Bremsscheibenreibfläche beweglichen zuspannseitigen Bremsbelag (8);
    c. einer Betätigungseinrichtung mit einem wenigstens mit Druckluft beaufschlagbaren Bremszylinder (6) oder mit einem elektromechanischen Aktuator als Bremskrafterzeuger, der auf eine Zuspannvorrichtung (10) zum Zuspannen des Bremsbelags (8) wirkt, einem Bremsdrehhebel (11), und einem Betätigungsstempel (22); und
    d. einer Selbstverstärkungseinrichtung mit einem parallel zu dem Betätigungsstempel (22) angeordneten Selbstverstärkungsstempel (27);
    **dadurch gekennzeichnet, dass**
    e. der Betätigungsstempel (22) und der Selbstverstärkungsstempel (27) an dem Bremsdrehhebel (11) abgestützt sind.

2.  Selbstverstärkende Scheibenbremse (1) nach Anspruch 1, **dadurch gekennzeichnet, dass** der Betätigungsstempel (22) und der Selbstverstärkungsstempel (27) mit dem Bremsbelag (8) oder mit einer mit dem Bremsbelag (8) verbundenen Druckplatte (9) und dem Bremsdrehhebel (11) zum Ausgleich von Schwenkbewegungen des Bremsdrehhebels (11) und Umfangsschiebebewegungen des zuspannseitigen Bremsbelags (8) oder der mit dem Bremsbelag (8) verbundenen Druckplatte (9) verschwenkbar verbunden sind.

3.  Selbstverstärkende Scheibenbremse (1) nach Anspruch 1 oder 2, **dadurch gekennzeichnet, dass** der Bremsdrehhebel (11) über einen Betätigungsarm (13) mit dem Betätigungsstempel (22) in einem Betätigungslager (A) und über einen Stützarm (14) mit dem Selbstverstärkungsstempel (27) in einem Stützlager (B) zusammenwirken, wobei der Bremsdrehhebel (11) in einem Bremsdrehhebellager (C) an dem Bremssattel (5) gelagert ist.

4.  Selbstverstärkende Scheibenbremse (1) nach Anspruch 3, **dadurch gekennzeichnet, dass** das Betätigungslager (A), das Stützlager (B) und das Bremshebeldrehlager (C) jeweils eine Kugel (17, 18, 20) in kalottenartigen Aufnahmen (17, 24; 18, 19; 15) aufweisen.

5. Selbstverstärkende Scheibenbremse (1) nach Anspruch 4, **dadurch gekennzeichnet, dass** der Bremsdrehhebel (11) mit dem Bremshebeldrehlager (C) um eine Bremsdrehhebelachse (19) verschwenkbar ist, welche durch das Stützlager (B) verläuft, wobei das Betätigungslager (A) exzentrisch zu der Bremshebeldrehachse (19) angeordnet ist.

6. Selbstverstärkende Scheibenbremse (1) nach einem der Ansprüche 3 bis 5, **dadurch gekennzeichnet, dass** der Bremsdrehhebel (11) einen Antriebsarm (12) aufweist, dessen freies Ende mit dem Bremszylinder (6) oder mit dem elektromechanischen Aktuator zusammenwirkt, und dessen anderes Ende einen zentralen Abschnitt als Lagerabschnitt (D) bildet, welcher mit dem Betätigungsarm (13) und dem Stützarm (14) des Bremsdrehhebels (11) verbunden ist und einen Bestandteil des Bremsdrehhebellagers (C) bildet.

7. Selbstverstärkende Scheibenbremse (1) nach einem der Ansprüche 3 bis 6, **dadurch gekennzeichnet, dass** der Betätigungsarm (13) und der Stützarm (14) des Bremsdrehhebels (11) jeweils einen Hebelarm (L1, L2) eines Hebels (H1) als eine Art Waagebalken um eine Längsachse (LA) des Bremsdrehhebels (11) bilden, welche durch das Bremshebeldrehlager (C) verläuft und senkrecht auf der Bremshebeldrehachse (19) steht.

8. Selbstverstärkende Scheibenbremse (1) nach Anspruch 7, **dadurch gekennzeichnet, dass** die Hebelarme (L1, L2) des Hebels (H1) gleiche Längen aufweisen.

9. Selbstverstärkende Scheibenbremse (1) nach einem der Ansprüche 2 bis 8, **dadurch gekennzeichnet, dass** der Betätigungsstempel (22) an dem Bremsbelag (8) oder der mit dem Bremsbelag (8) verbundenen Druckplatte (9) mit einer Gabelkopfanbindung (25) verschwenkbar angelenkt ist, wobei der Selbstverstärkungsstempel (27) über eine Kugel (30) und Rampen (32) an dem Bremsbelag (8) oder der mit dem Bremsbelag (8) verbundenen Druckplatte (9) angelenkt ist.

10. Selbstverstärkende Scheibenbremse (1) nach einem der Ansprüche 1 bis 8, **dadurch gekennzeichnet, dass** die Scheibenbremse wenigstens eine Nachstelleinrichtung (34, 35, 36, 37) zum Belag- und/oder Scheibenverschleiß aufweist, wobei der Betätigungsstempel (22) mit einem Gewindestößel (23) und der Selbstverstärkungsstempel (27) mit einer Gewindespindel (28) als axial längenveränderliche, insbesondere teleskopierbare, Baueinheiten ausgebildet sind.

11. Selbstverstärkende Scheibenbremse (1) nach Anspruch 10, **dadurch gekennzeichnet, dass** der Betätigungsstempel (22) oder der Gewindestößel (23) an dem Bremsbelag (8) oder einer mit dem Bremsbelag (8) verbundenen Druckplatte (9) mit einer Gabelkopfanbindung (25) verschwenkbar angelenkt ist, wobei der Selbstverstärkungsstempel (27) oder die Gewindespindel (28) über eine Kugel (30) und Rampen (32) an dem Bremsbelag (8) oder der mit dem Bremsbelag (8) verbundenen Druckplatte (9) angelenkt ist.

**Claims**

1. Self-energising disc brake (1) with pneumatic or electromechanical actuation, comprising:

    a. a brake caliper, at least one reaction-side and one application-side brake pad (7, 8) and a brake disc (2);
    b. at least one application-side brake pad (8) which can be moved both in a direction parallel to the brake disc rotation axis (3) and also parallel to a brake disc frictional surface;
    c. an actuating means with a brake cylinder (6), to which at least compressed air can be applied, or with an electromechanical actuator as a brake force generator which acts on a brake application device (10) for applying the brake pad (8), a brake rotary lever (11) and an actuating plunger (22); and
    d. a self-energising means having a self-energising plunger (27) arranged parallel to the actuating plunger (22);
    **characterised in that**
    e. the actuating plunger (22) and the self-energising plunger (27) are supported on the brake rotary lever (11).

2. Self-energising disc brake (1) according to claim 1, **characterised in that** the actuating plunger (22) and the self-energising plunger (27) are pivotably connected to the brake pad (8) or to a pressure plate (9) connected to the brake pad (8) and the brake rotary lever (11) to compensate for pivot movements of the brake rotary lever (11) and peripheral displacement movements of the application-side brake pad (8) or the pressure plate (9) connected to the brake pad (8).

3. Self-energising disc brake (1) according to claim 1 or 2, **characterised in that** the brake rotary lever (11) cooperates via an actuating arm (13) with the actuating plunger (22) in an actuating bearing (A) and via a support arm (14) with the self-energising plunger (27) in a support bearing (B), wherein the brake rotary lever (11) is mounted in a brake rotary lever bearing (C) on the brake caliper (5).

4. Self-energising disc brake (1) according to claim 3, **characterised in that** the actuating bearing (A), the support bearing (B) and the brake rotary lever bearing (C) each comprise a ball (17, 18, 20) in dome-like receptacles (17, 24; 18, 19; 15).

5. Self-energising disc brake (1) according to claim 4, **characterised in that** the brake rotary lever (11) can be pivoted with the brake rotary lever bearing (C) around a brake rotary lever axis (19) which extends through the support bearing (B), wherein the actuating bearing (A) is arranged eccentrically relative to the brake lever rotation axis (19).

6. Self-energising disc brake (1) according to one of the claims 3 to 5, **characterised in that** the brake rotary lever (11) comprises a drive arm (12), of which the free end cooperates with the brake cylinder (6) or with the electromechanical actuator, and the other end thereof forms a central section as a bearing section (D), which is connected to the actuating arm (13) and the support arm (14) of the brake rotary lever (11) and forms a component of the brake rotary lever bearing (C).

7. Self-energising disc brake (1) according to one of the claims 3 to 6, **characterised in that** the actuating arm (13) and the support arm (14) of the brake rotary lever (11) form respectively a lever arm (L1, L2) of a lever (H1) as a type of balance beam around a longitudinal axis (LA) of the brake rotary lever (11) which extends through the brake rotary lever bearing (C) and is perpendicular relative to the brake lever rotation axis (19).

8. Self-energising disc brake (1) according to claim 7, **characterised in that** the lever arms (L1, L2) of the lever (H1) have the same lengths.

9. Self-energising disc brake (1) according to one of the claims 2 to 8, **characterised in that** the actuating plunger (22) is pivotably attached to the brake pad (8) or to the pressure plate (9) connected to the brake pad (8) with a fork head attachment (25), wherein the self-energising plunger (27) is attached via a ball (30) and ramps (32) to the brake pad (8) or the pressure plate (9) connected to the brake pad (8).

10. Self-energising disc brake (1) according to one of the claims 1 to 8, **characterised in that** the disc brake comprises at least one adjusting means (34, 35, 36, 37) for pad and / or disc wear, wherein the actuating plunger (22) with a threaded tappet (23) and the self-energising plunger (27) with a threaded spindle (28) are formed as components which can be changed in length axially, in particular being telescopic.

11. Self-energising disc brake (1) according to claim 10, **characterised in that** the actuating plunger (22) or the threaded tappet (23) is pivotably attached to the brake pad (8) or to a pressure plate (9) connected to the brake pad (8) with a fork head attachment (25), wherein the self-energising plunger (27) or the threaded spindle (28) is attached via a ball (30) and ramps (32) to the brake pad (8) or to the pressure plate (9) connected to the brake pad (8).

**Revendications**

1. Frein à disque en conception à renfort automatique (1) à commande pneumatique ou électromécanique, comprenant :

   a. un étrier de frein (5), au moins une garniture de frein (7, 8) du côté de réaction et au moins une garniture de frein du côté de serrage (7, 8) et un disque de frein (2) ;
   b. au moins une garniture de frein (8) du côté de serrage et mobile non seulement en une direction en parallèle à l'axe de révolution du disque de frein (3) mais aussi en direction en parallèle à la surface de frottement dudit disque de frein ;
   c. un moyen de commande à au moins un cylindre de freinage (6), apte à être commandé par air comprimé ou à un actionneur électromécanique en tant que générateur de l'effort de freinage, qui agit sur une unité de serrage (10) à serrer ladite garniture de frein (8), un levier rotatif de freinage (11) et un poinçon de commande (22) ; et
   d. un moyen de renfort automatique à un poinçon de renfort automatique (27) disposé en parallèle audit poinçon de commande (22),
**caractérisé en ce**

e. **que** ledit poinçon de commande et ledit poinçon de renfort automatique (27) s'appuient audit levier rotatif de freinage (11).

**2.** Frein à disque à renfort automatique (1) selon la revendication 1, **caractérisé en ce que** ledit poinçon de commande (22) et ledit poinçon de renfort automatique (27) sont reliés de manière pivotable à ladite garniture de frein (8) ou à une plaque de pression (9) et ledit levier rotatif de freinage (11) pour la compensation des mouvements de pivotement dudit levier rotatif de freinage (11) et des mouvements de poussée périphérique de ladite garniture de freinage (8) du côté de serrage ou à ladite plaque de pression (9) reliée à ladite garniture de freinage (8).

**3.** Frein à disque à renfort automatique (1) selon la revendication 1 ou 2, **caractérisé en ce que** ledit levier rotatif de freinage (11) coopère avec ledit poinçon de commande (22) via un bras de commande (13) dans un palier de commande (A) et via un bras d'appui (14) avec ledit poinçon de renfort automatique (27) dans un palier d'appui (B), audit levier rotatif de freinage (11) étant logé dans un palier de levier rotatif de freinage (C) audit étrier de frein (5).

**4.** Frein à disque à renfort automatique (1) selon la revendication 3, **caractérisé en ce que** ledit palier de commande (A), ledit palier d'appui (B) et ledit palier rotatif du levier de freinage (C) comprennent une bille respective (17, 18, 20) dans un élément récepteur en calotte (17, 24; 18, 19; 15).

**5.** Frein à disque à renfort automatique (1) selon la revendication 4, **caractérisé en ce que** ledit levier rotatif de freinage (11) avec ledit palier rotatif du levier de freinage (C) est pivotable autour d'un axe de révolution du levier de freinage (19), qui s'étend par ledit palier d'appui (B), audit palier de commande (A) étant disposé en position excentrique relativement à l'axe de révolution du levier de freinage (19).

**6.** Frein à disque à renfort automatique (1) selon une quelconque des revendications 3 à 5, **caractérisé en ce que** ledit levier rotatif de freinage (11) comprend un bras d'entraînement (12), dont l'extrémité libre coopère avec ledit cylindre de frein (6) ou un actionneur électromécanique, et dont l'autre extrémité constitue une partie centrale en tant que partie de palier (D), qui est reliée audit bras de commande (13) et ledit bras d'appui (14) dudit levier rotatif de freinage (11), en constituant un composant dudit palier rotatif du levier de freinage (C).

**7.** Frein à disque à renfort automatique (1) selon une quelconque des revendications 3 à 6, **caractérisé en ce que** ledit bras de commande (13) et ledit bras d'appui (14) dudit levier rotatif de freinage (11) comprennent un bras de levier respectif (L1, L2) d'un levier (H1) en tant qu'une sorte de fléau autour d'un axe longitudinal (LA) dudit levier rotatif de freinage (11), qui s'étend par ledit palier rotatif du levier de freinage (C) et se trouve en position orthogonale sur ledit axe de révolution du levier de freinage (19).

**8.** Frein à disque à renfort automatique (1) selon la revendication 7, **caractérisé en ce que** lesdits bras de levier (L1, L2) dudit levier (H1) présentent des longueurs égales.

**9.** Frein à disque à renfort automatique (1) selon une quelconque des revendications 2 à 8, **caractérisé en ce que** ledit poinçon de commande (22) est articulé de manière pivotable à ladite garniture de frein (8) ou à ladite plaque de pression (9) reliée à ladite garniture de frein (8), moyennant une liaison à tête de fourche (25), dans lequel ledit poinçon de renfort automatique (27) est articulé via une bille (30) et des rampes (32) à ladite garniture de frein (8) ou à ladite plaque de pression (9) reliée à ladite garniture de frein (8).

**10.** Frein à disque à renfort automatique (1) selon une quelconque des revendications 1 à 8, **caractérisé en ce que** le frein à disque comprend au moins un moyen de rattrapage de jeu (34, 35, 36, 37) pour l'ajustement de l'usure de la garniture et/ou du disque, dans lequel ledit poinçon de commande (2) est configuré à un poussoir fileté (23) et ledit poinçon de renfort automatique (27) est pourvu d'une broche filetée (28) en tant que des unités modulaires variables en longueur, en particulier de manière télescopique.

**11.** Frein à disque à renfort automatique (1) selon la revendication 10, **caractérisé en ce que** ledit poinçon de commande (22) ou ledit poussoir fileté (23) est articulé, de manière pivotable, à ladite garniture de frein (9) ou à une plaque de pression reliée à ladite garniture de frein (8), moyennant une liaison à tête fourchée (25), dans lequel ledit poinçon de renfort automatique (27) ou ladite broche filetée (28) est articulé via une bille (30) et des rampes (32) à ladite garniture de frein (8) ou à ladite plaque de pression (9) reliée à ladite garniture de frein (8).

Fig. 1

Fig. 2

11

16

13

15

14

18

17

19

L3

L1    L2

X

X

**Fig. 3**

$F_L$    L1    L2    $F_R$

H1

$(F_R')$

**Fig. 3a**

$F_M$

$F_Z$

H2

L4

$F_L$

L3

$(F_R')$    $F_M$    $F_R$

**Fig. 4a**

16

12

11

L4    L4

17

L3

15    19    18

**Fig. 4**

14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009090011 A1

- DE 102006785 A1